Europäisches Patentamt

European Patent Office

Office européen des brevets

(11) Numéro de publication : **0 427 639 B1**

(12) **FASCICULE DE BREVET EUROPEEN**

(45) Date de publication du fascicule du brevet :
**17.08.94 Bulletin 94/33**

(51) Int. Cl.$^5$ : **A23K 1/16**, A23K 1/18

(21) Numéro de dépôt : **90403189.5**

(22) Date de dépôt : **09.11.90**

(54) **Utilisation d'amino acides protégés pour l'alimentation du mouton.**

(30) Priorité : **10.11.89 FR 8914777**

(43) Date de publication de la demande :
**15.05.91 Bulletin 91/20**

(45) Mention de la délivrance du brevet :
**17.08.94 Bulletin 94/33**

(84) Etats contractants désignés :
**AT BE CH DE DK ES FR GB GR IT LI LU NL SE**

(56) Documents cités :
**EP-A- 0 260 186
EP-A- 0 321 337
GB-A- 1 137 214
GB-A- 1 324 087
AUSTRALIAN JOURNAL OF EXPERIMENTAL
AGRICULTURE, vol. 28, no. 2, 1988, pages
179-185; D.J. Cottle: "Effects of defaunation of
the rumen and supplementation with amino
acids on the wool production of housed Saxon
Merionos. 2. Methionine and protected
methionine"**

(56) Documents cités :
**AUSTRALIAN JOURNAL OF AGRICULTURAL
RESEARCH, vol. 30, no. 4, 1979, pages
711-723; J.L. WHEELER et al.: "Effect of nutrition, genotype, lactation and woolcover on
response by grazing sheep to methionine
esters and polymer-encapsulated methionine"**

(73) Titulaire : **RHONE-POULENC NUTRITION
ANIMALE
Rue Marcel Lingot
F-03600 Commentry (FR)**

(72) Inventeur : **Robert, Jean-Claude
12 rue des Mésanges
F-03310 Neris les Bains (FR)**
Inventeur : **Johnson, Rya
8 Colan Crescent
Little River, Victoria 3211 (AU)**

(74) Mandataire : **Le Pennec, Magali et al
RHONE-POULENC SANTE
Service Brevets Santé,
20 Avenue Raymond Aron
F-92160 Antony (FR)**

Jouve, 18, rue Saint-Denis, 75001 PARIS

**Description**

La présente invention concerne l'utilisation d'acides aminés protégés vis-a-vis du pH du rumen pour l'alimentation du mouton. Elle concerne plus particulièrement l'utilisation de méthionine protégée vis-à-vis du pH du rumen pour l'alimentation du mouton.

Il est connu, par exemple selon l'article publié par REIS et SCHINCKEL en 1963 dans le Journal Australien des Sciences Biologiques, que l'injection dans la caillette de soit la L-cysteine soit la DL-méthionine à une dose de 1,5 g à 3 g par jour augmente la pousse de la laine chez le mouton.

L'addition d'aminoacides soufrés dans la ration alimentaire des ovins ne provoque par contre aucun effet sur la pousse de la laine chez le mouton.

D'un point de vue agricole, il était impossible d'envisager une injection dans la caillette d'aminoacides, il fallait donc, pour pouvoir obtenir une pousse de la laine améliorée, utiliser un moyen pour protéger les aminoacides qui leurs permette de passer la poche du rumen sans dégradation tout en se libérant de façon suffisamment rapide dans la caillette et/ou dans l'intestin ceci afin de leur permettre d'effectuer leur effet bénéfique.

Le brevet GB 1 137 214 décrit l'usage de protéines ou d'aminoacides pour l'alimentation du mouton. La protéine est essentiellement la caséine qui est protégée par réaction chimique avec le formaldéhyde. La méthionine est protégée par un enrobage à l'aide d'une pâte de caséine traitée par le formaldéhyde. Aucun exemple ne décrit l'enrobage de particules de faible dimension et leur utilisation chez le mouton pour augmenter la production de laine.

Le brevet GB 1 324 087 décrit l'enrobage de comprimés de méthionine ayant un diamètre de 5 mm où l'inclusion de poudre de méthionine dans des coquilles de polymère préformées qui sont recouvertes d'un polymère pH sensible. Aucun essai sur l'animal ne permet de déceler l'effet du diamètre des particules sur la pousse de la laine.

La présente invention a permis d'atteindre cet objectif protéger les acides aminés permettant d'augmenter la pousse de la laine de façon à pouvoir les administrer au mouton dans sa ration alimentaire. Ces aminoacides se présentent sous forme de granulés d'aminoacides enrobés ayant un diamètre compris entre 0,5 et 1,5 mm.

Ainsi ont été trouvés deux types de copolymères permettant de protéger les aminoacides pouvant être administrés au mouton.

Le premier type de copolymère consiste en une association d'un copolymère aminé basique et d'une substance hydrophobe dont le point de fusion est supérieur à 60°C et/ou d'un polymère non hydrosoluble. Le copolymère aminé basique est choisi parmi les copolymères issus de la réaction :

- d'un monomère éthylénique neutre tel que l'acrylate ou le méthacrylate de méthyle, le styrène, l'acrylonitrile, l'acétate de vinyle et,
- d'un monomère diéthylénique portant un groupement azoté basique corne l'acrylate ou le méthacrylate de diéthylaminoéthyle, l'acrylate ou le méthacrylate de t.butylaminoéthyle, le méthacrylate de morpholinoéthyle ou les vinylpyridines.

La substance hydrophobe est choisie de préférence parmi les acides gras, les esters gras, les alcools gras, les paraffines, les cires naturelles ou synthétiques. On préfère utiliser l'acide stéarique. Le polymère non hydrosoluble est choisi parmi les éthers ou les esters de cellulose tels que l'éthylcellulose ou l'acétobutyrate de cellulose et les esters polyvinyliques tels que l'acétate de polyvinyle. On préfère utiliser des compositions contenant 85 % en poids d'aminoacides choisis de préférence parmi la lysine et/ou la methionine pour 15 % en poids d'enrobage. L'enrobage contenant 10 à 30 % de copolymère aminobasique et de 70 à 90 % d'un éventuel mélange de substance hydrophobe et d'un polymère non hydrosoluble.

Le deuxième type de copolymères utilisables est constitué d'un mélange d'un polymère naturel corne la zéine associé à une substance hydrophobe présentant un point de fusion supérieur à 60°C et/ou à un polymère non hydrosoluble.

La substance hydrophobe ainsi que le polymère non hydrosoluble répondent aux définitions données préalablement.

On préfère utiliser une composition contenant 30 à 80 % de zéine, 0 à 70 % d'un polymère non hydrosoluble et 10 à 70 % d'une substance hydrophobe.

Il est toujours possible d'ajouter à ces compositions un agent plastifiant.

L'agent plastifiant est choisi notamment parmi la triacétine, le propyléneglycol, le phtalate de butyle et l'oléate de sodium.

Ces compositions d'enrobage sont connues et ont notamment été décrites dans le brevet EP 260186 pour le premier type de composition et dans le brevet EP 321337 pour le deuxième type de composition.

Les dits aminoacides protégés se présentent sous forme de granulés dont la variation granulométrique n'est pas adaptée à l'alimentation du mouton. Il est apparu de façon tout à fait inattendue que lorsque le dia-

2

mètre des granulés de méthionine enrobée était compris entre 0,5 et 1,5 mm et de préférence entre 0,5 et 1 mm, le taux de méthionine absorbée était dix fois supérieur à celui obtenu lorsque la granulométrie de ces granulés était à l'extérieur de cette fourchette.

On administre à ces animaux de préférence entre 0,01 et 1 g de méthionine par kilo de poids de l'animal et par jour et encore plus préférentiellement entre 0,01 g et 0,2 g par jour.

Lors de l'administration de ces granulés contenant l'aminoacide protégé aux ovins, il est apparu que la quantité de laine obtenue par jour était augmentée d'environ 20 % par rapport à un lot témoin de mouton non traité. La présente invention sera plus complètement décrite à l'aide des exemples suivants.

EXEMPLE 1

La méthionine protégée a la compostion suivante :
- méthionine :          80 %
- acide stéarique :          13,3 %
- vinyl-2 pyridylstyrène :          3,3 %
- alcool polyvinylique :          1,67 %
- eau :          1,67 %.

On utilise 10 moutons Mérino de 34 kg tondus 8 semaines avant l'essai. Chacun est enfermé dans un box au sol grillagé. Ils sont alimentés à volonté par un régime de base constitué de :
- 30 % de luzerne,
- 70 % d'avoine.

A ce régime, dans une première série d'essais, on ajoute 50 g par jour de blé broyé pendant six semaines avant l'introduction de méthionine. On ajoute ensuite 3 g/jour de méthionine protégée ou 3 g/jour de méthionine non protégée dans les essais 1 et 2 et non dans l'essai témoin.

La supplémentation (blé broyé avec ou sans méthionine) est donnée pendant deux périodes de 30 jours. Après chaque période, on compare le poids de laine obtenue et le diamètre moyen des brins sur un échantillon de 10 cm x 10 cm de peau.

Dans une deuxième série d'essais, le taux sanguin de méthionine est déterminé sur deux lots d'animaux ayant reçu une dose de 6 g de méthionine protégée ou de 6 g de méthionine non protégée par jour 1, 2, 4, 6, 8 et 12 heures après l'ingestion.

Les résultats dont indiqués dans les tableaux 1 et 2.

EXEMPLE 2

Dans cet exemple, on donne à chaque animal 600 g d'aliment concentré supplémenté en méthionine deux fois par jour et 600 g de foin de luzerne.

La méthionine est apportée sous forme de granulés enrobés dont le diamètre varie selon les classes suivantes, mélangée à l'aliment concentré :
- 0,52 - 0,65 mm,
- 0,65 - 0,82 mm,
- 0,82 - 1,02 mm,
- 1,02 - 1,62 mm,
- 1,62 - 3,17 mm.

L'enrobage a la compsotion suivante :
- acide stéarique :          15 %
- acétobutyrate de cellulose :          25,5 %
- vinyl-2 pyridylstyrène (70/30) :          59,5 %

L'aliment concentré a la composition suivante :
- orge :          44 %
- blé :          22 %
- tourteau de soja :          10 %
- son :          12 %
- tourteau de palmiste mélassé :          8 %
- complément :          4 %

Les quantités de méthionine apportées par kg de poids sont indiquées dans le tableau de résultat n° 3.

EXEMPLE 3

On reproduit l'exemple 2 en donnant à 30 Mérinos d'un poids moyen de 60 kg un concentré supplémenté par 2 g de méthionine enrobée de différentes granulométries par mouton et par jour.

La composition de l'aliment est la suivante :
- 70 % de luzerne
- 30 % d'avoine.

On pèse la quantité de laine sur des zones de tonte de 10 x 12 cm après 22 jours de traitement.

| Essai | Quantité de laine en gramme par zone | Augmentation par rapport au témoin |
|---|---|---|
| Témoin | 3,91 ± 0,36 | 0 |
| 0,5 - 0,8 mm | 4,58 ± 0,63 | + 17 % |
| 0,8 mm - 1,25 mm | 4,13 ± 0,55 | + 6 % |
| 1,25 mm - 1,60 mm | 4,25 ± 0,36 | + 9 % |
| 1,60 mm - 2,00 mm | 4,04 ± 0,63 | + 3 % |

EP 0 427 639 B1

TABLEAU 1

| QUANTITE DE LAINE EN mg/100 CM$^2$/JOUR | LOT TEMOIN | AJOUT DE 3 G/JOUR DE METHIONINE NON PROTEGEE | AJOUT DE 3 G/JOUR DE METHIONINE PROTEGEE |
|---|---|---|---|
| Première période | 108 | 109 | 129 |
| Deuxième période | 114 | 120 | 137 |

TABLEAU 2

| | TAUX SANGUIN EN MICROMOLES PAR LITRE | | |
|---|---|---|---|
| TEMPS | TEMOIN | AJOUT DE 6 G/JOUR DE METHIONINE NON PROTEGEE | AJOUT DE 6 G / JOUR DE METHIONINE PROTEGEE |
| 1 heure | 28 | 38 | 280 |
| 2 heures | 28 | 45 | 280 |
| 4 heures | 28 | 65 | 350 |
| 6 heures | 25 | 45 | 540 |
| 8 heures | 23 | 33 | 600 |
| 12 heures | 21 | 23 | 680 |

TABLEAU 3

| ESSAIS | COMPOSITION | | DIAMETRE (MM) | QUANTITE EQUIVALENT METHIONINE APPORTEE g/kg (POIDS VIF)$^{0,75}$ | METHIONINEMIE mg/100 g SANG TOTAL | | VARIATION |
|---|---|---|---|---|---|---|---|
| | METHIONINE | ENROBANT | | | TEMOIN | EXPERIMENTAL | |
| 1 | 77,8 | 27,2 | 0,52 à 0,65 | 0,81 | 0,31 | 12,4 | + 12,1 |
| 2 | | | | 0,81 | 0,37 | 14,3 | + 13,9 |
| 3 | 81,8 | 18,2 | 0,65 à 0,82 | 0,82 | 0,37 | 7,3 | + 6,9 |
| 4 | | | | 0,77 | 0,40 | 5,4 | + 5 |
| 5 | 85,3 | 14,7 | 0,82 à 1,02 | 0,81 | 0,33 | 11,9 | + 11,6 |
| 6 | | | | 0,81 | 0,26 | 10,5 | + 10,1 |
| 7 | 89,1 | 10,9 | 1,02 à 1,62 | 0,81 | 0,37 | 1,0 | + 0,6 |
| 8 | | | | 0,83 | 0,26 | 1,6 | + 1,3 |
| 9 | 93,5 | 6,5 | 1,62 à 3,17 | 0,82 | 0,37 | 0,5 | + 0,1 |
| 10 | | | | 0,79 | 0,46 | 1,0 | + 0,5 |

EP 0 427 639 B1

EP 0 427 639 B1

## Revendications

1. Utilisation d'aminoacides protégés vis-à-vis du pH du rumen dans l'alimentation du mouton pour augmenter la quantité de laine produite caractérisés en ce qu'ils se présentent sous forme de granulés d'aminoacides enrobés ayant un diamètre compris entre 0,5 et 1,5 mm.

2. Utilisation dans l'alimentation du mouton d'acides aminés selon la revendication 1 caractérisés en ce qu'ils sont protégés par un polymère résistant au pH alcalin et se libérant à pH acide (pH 3,5) ou dans l'intestin.

3. Utilisation dans l'alimentation du mouton d'acides aminés selon la revendication 1 caractérisés en ce qu'ils sont protégés par une couche constituée d'un copolymère aminé basique et d'une substance hydrophobe dont le point de fusion est supérieur à 60°C et/ou d'un copolymère non hydrosoluble.

4. Utilisation dans l'alimentation du mouton d'acides aminés selon la revendication 1 caractérisés en ce qu'ils sont protégés par une couche constituée d'un copolymère à base de zéine et d'une substance hydrophobe dont le point de fusion est supérieur à 60°C et/ou d'un copolymère non hydrosoluble.

5. Utilisation selon la revendication 3 d'acides aminés protégés par une couche constituée d'un copolymère styrène-vinylpyridine en association avec une substance hydrophobe, de préférence l'acide stéarique et un copolymère non hydrosoluble de préférnce l'éthylcellulose.

6. Utilisation selon la revendication 1 de méthionine et/ou de lysine protégée vis-à-vis du pH du rumen.

7. Utilisation selon la revendication 1 d'acides aminés protégés caractérisés en ce qu'ils se présentent sous forme de granulés d'aminoacides enrobés ayant un diamètre compris entre 0,5 et 1 mm.

8. Utilisation selon l'une quelconque des revendications précédentes d'acides aminés protégés selon une ration journalière comprise entre 0,01 et 1 g de méthionine par kg de poids de l'animal et de préférence entre 0,01 et 0,2 g par jour.

## Patentansprüche

1. Verwendung von gegenüber dem pH des Rumen geschützten Aminosäuren bei der Ernährung des Schafes zur Erhöhung der erzeugten Wollmenge, dadurch gekennzeichnet, daß sie in Form von umhüllten Aminosäurekörnern mit einem Durchmesser zwischen 0,5 und 1,5 mm vorliegen.

2. Verwendung von Aminosäuren bei der Ernährung des Schafes gemäß Anspruch 1, dadurch gekennzeichnet, daß sie durch ein Polymeres geschützt sind, welches gegenüber alkalischem pH beständig ist und bei saurem pH (pH 3,5)oder im Darm freigesetzt wird.

3. Verwendung von Aminosäuren bei der Ernährung des Schafes gemäß Anspruch 1, dadurch gekennzeichnet, daß sie durch eine Schicht geschützt sind, bestehend aus einem basischen Aminogruppen aufweisenden Copolymeren und einer hydrophoben Substanz, deren Schmelzpunkt oberhalb 60°C liegt, und/oder einem nicht-wasserlöslichen Copolymeren.

4. Verwendung von Aminosäuren bei der Ernährung des Schafes gemäß Anspruch 1, dadurch gekennzeichnet, daß sie durch eine Schicht geschützt sind, bestehend aus einem Copolymeren auf Basis von Zein und einer hydrophoben Substanz, deren Schmelzpunkt oberhalb 60°C liegt, und/oder einem nicht-wasserlöslichen Copolymeren.

5. Verwendung von Aminosäuren gemäß Anspruch 3 , die geschützt sind, durch eine Schicht, bestehend aus einem Styrol-Vinyl-Pyridin-Copolymeren in Assoziation mit einer hydrophoben Substanz, vorzugsweise Stearinsäure, und einem nicht-wasserlöslichen Copolymeren, vorzugsweise Ethylcellulose,

6. Verwendung gemäß Anspruch 1 von gegenüber dem pH des Rumen geschütztem Methionin und/oder Lysin.

7

7. Verwendung von geschützten Aminosäuren gemäß Anspruch 1, dadurch gekennzeichnet, daß sie in Form von umhüllten Aminosäurekörnern mit einem Durchmesser zwischen 0,5 und 1 mm vorliegen.

8. Verwendung von geschützten Aminosäuren gemäß einem der vorhergehenden Ansprüche, entsprechend einer Tagesration zwischen 0,01 und 1 g Methionin je kg Tiergewicht und vorzugsweise zwischen 0,01 und 0,2 g je Tag.

**Claims**

1. Use of amino acids which are protected with respect to the pH of the rumen in feeding sheep in order to increase the amount of wool produced, characterized in that they are provided in the form of coated amino acid granules having a diameter of between 0.5 and 1.5 mm.

2. Use in feeding sheep of amino acids according to claim 1, characterized in that they are protected by a polymer which is resistant to alkaline pH and which is released at acidic pH (pH 3.5) or in the intestines.

3. Use in feeding sheep of amino acids according to claim 1, characterized in that they are protected by a layer consisting of a basic amino copolymer and of a hydrophobic substance whose melting point is greater than 60°C and/or of a non-water-soluble copolymer.

4. Use in feeding sheep of amino acids according to claim 1, characterized in that they are protected by a layer consisting of a zein-based copolymer and of a hydrophobic substance whose melting point is greater than 60°C and/or of a non-water-soluble copolymer.

5. Use according to claim 3 of amino acids protected by a layer consisting of a styrene-vinylpyridine copolymer in combination with a hydrophobic substance, preferably stearic acid, and a non-water-soluble copolymer, preferably ethyl cellulose.

6. Use according to claim 1 of methionine and/or of lysine which is/are protected with respect to the pH of the rumen.

7. Use according to claim 1 of protected amino acids, characterized in that they are provided in the form of coated amino acid granules having a diameter of between 0.5 and 1 mm.

8. Use according to any one of the preceding claims of protected amino acids according to a daily intake of between 0.01 and 1 g of methionine per kg of animal weight and preferably between 0.01 and 0.2 g per day.